# EUROPÄISCHE PATENTSCHRIFT

(11) **EP 3 736 459 B1**
(45) Veröffentlichungstag und Bekanntmachung des Hinweises auf die Patenterteilung: **30.06.2021**
(21) Anmeldenummer: 20172083.6
(22) Anmeldetag: 29.04.2020
(51) Int. Cl.: F16B 45/00, F16B 23/00, F16B 35/04

(54) **ANSCHLAGPUNKT**
ANCHORAGE POINT
POINT D'ANCRAGE

(30) Priorität: 07.05.2019 DE 202019102552 U
(43) Veröffentlichungstag der Anmeldung: 11.11.2020
(73) Patentinhaber: J.D. Theile GmbH & Co. KG, 58239 Schwerte (DE)
(72) Erfinder: ZHANG, Xiu Wei, 58239 Schwerte (DE); KRESIC, Ivan, 58239 Schwerte (DE)
(74) Vertreter: Haverkamp, Jens

(56) Entgegenhaltungen:
- DE-C2- 4 336 779
- DE-U1-202012 103 079

## Beschreibung

Die Erfindung betrifft einen Anschlagpunkt umfassend ein Unterteil mit einem einen Schraubenkopf aufweisenden Schraubbolzen zum Anschließen des Anschlagpunktes an einen mit diesem festzulegenden oder handzuhabenden Gegenstand und ein gegenüber dem Unterteil um die Längsachse des Schraubbolzens drehbares, an das Unterteil angeschlossenes Oberteil mit einem Anschlussmittel zum Anschließen eines Anschlag- oder Zurrmittels.

Derartige Anschlagpunkte werden typischerweise zum Heben von Gegenständen verwendet. Angeschlossen werden die Anschlagpunkte mit ihrem Unterteil durch eine als Schraubbolzen ausgelegte Anschlussschraube an den zu hebenden Gegenstand, wobei zum Heben eines Gegenstandes typischerweise mehrere Anschlagpunkte zum Einhängen eines entsprechenden Hebegeschirrs verwendet werden. Damit sich bei Anliegen einer durch ein in das Ösenteil eingehängtes Hebezeug das Ösenteil entsprechend der darauf wirkenden Zugrichtung ausrichtet, ist das Ösenteil gegenüber der Anschlussschraube drehbar. Dieselben Eigenschaften einer Anschlagöse sind auch gewünscht, wenn diese zum Verzurren eines Gegenstandes eingesetzt wird.

Anschlagpunkte verbleiben typischerweise an dem zu hebenden oder zu verzurrenden Gegenstand nur für die Dauer des Hebens bzw. Festlegens. Daher wird eine solche Anschlagöse mittels einer mit einem Gewindeabschnitt versehenen Anschlussschraube in eine zu diesem Zweck vorgesehene und mit einem komplementären Innengewinde ausgestattete Gewindebohrung des handzuhabenden Gegenstandes eingeschraubt. Wird der Anschlagpunkt nicht mehr benötigt, wird dieser aus dem Gegenstand wieder herausgeschraubt. Somit gehört ein oftmaliges Ein- und Ausschrauben eines solchen Anschlagpunktes zu den typischen, bei seiner Verwendung benötigten Handhabungen. Um diesen Vorgang zu vereinfachen ist in DE 44 03 785 A1 vorgeschlagen worden, an das Ösenteil einen mit dem Kopf des Schraubbolzens kuppelbares Schraubwerkzeug anzuschließen, über das durch das Ösenteil eine Schraubbewegung in die Anschlussschraube einleitbar ist. Dabei ist vorgesehen, dass die Anschlussschraube beispielsweise als Innensechskantschraube ausgebildet ist und das Schraubwerkzeug ein komplementäres Werkzeug umfasst. Das Schraubwerkzeug selbst umfasst zum Anschließen desselben an das Ösenteil und zum Einleiten eines Drehmomentes einen um den Bogen des Ösenteils herumgeführten Bügel. Ist das Sechskantwerkzeug des Schraubwerkzeuges in die Innensechskantausnehmung der Anschlussschraube eingesetzt, ist die Anschlussschraube nach Überwinden des notwendigerweise vorhandenen Spiels zwischen dem Bogen des Ösenteils und dem Bügel drehmomentschlüssig an das Ösenteil angeschlossen. Mithin kann durch eine Drehbewegung des Ösenteils ohne zusätzliches Werkzeug die Anschlussschraube betätigt werden. Um das Schraubwerkzeug an das Ösenteil anzuschließen, verfügt der das Ösenteil einfassende Bügel des Schraubwerkzeuges über eine aufweitbare Öffnung, durch die der Bügel des Ösenteils zum Anschließen des Schraubwerkzeuges an das Ösenteil hindurchgeführt wird. Damit eine Drehmomentübertragung von dem Ösenteil auf die Anschlussschraube nicht nur zum losen Ein- oder Ausschrauben der Anschlussschraube in eine entsprechende Gewindebohrung eines Gegenstandes oder aus dieser heraus, sondern auch ein bestimmungsgemäßes Festlegen der Anschlussschraube und damit des Anschlagpunktes an dem Gegenstand vorgenommen werden kann, muss das Schraubwerkzeug eine hinreichende Stabilität aufweisen. Diesem wirkt in gewisser Weise das notwendige Vorsehen der aufweitbaren Einsetzöffnung im Bereich des Bügels entgegen. Mithin sind an das Schraubwerkzeug gewisse Anforderungen gestellt.

In DE 20 2012 103 079 U1 ist ein Anschlagpunkt beschrieben, bei dem der Schraubbolzen eine erste Drehmitnahmefläche aufweist. Dem in diesem Stand der Technik als Ösenteil beschriebenen Oberteil ist eine komplementäre Drehmitnahmefläche zugeordnet. Beide Drehmitnahmeflächen sind voneinander beanstandet. Die beiden Drehmitnahmeflächen sind so weit voneinander beabstandet, dass das Oberteil gegenüber dem Unterteil frei drehbar ist. Wenn zum Anschrauben des Anschlagpunktes an einen handzuhabenden Gegenstand das Unterteil an diesem Gegenstand angeschlossen werden soll, wird in den zwischen den beiden Drehmitnahmeflächen befindlichen Spalt ein Kupplungsstück eingesetzt, welches diesen Spalt füllt. Dann ist das Oberteil drehmomentschlüssig an das Unterteil angeschlossen, sodass der Anschlagpunkt durch Drehen des Oberteils an dem handzuhabenden Gegenstand angeschraubt werden kann. Bei diesem Konzept wird zum Herstellen der drehmomentschlüssigen Verbindung zwischen dem Oberteil und dem Unterteil ein zusätzliches Kupplungsstück benötigt. Dieses ist typischerweise mit einem Seil an das Oberteil unverlierbar angeschlossen. Als Kupplungsstück kann allerdings auch der Schaft oder die Spitze eines Schraubendrehers dienen. Vorteilhaft ist, dass der Schraubenkopf des Schraubbolzens frei zugänglich ist, damit, sollte das Unterteil übermaßen an dem Gegenstand verspannt sein, zum Lösen der Schraubbolzen auch mit einem Werkzeug zugänglich ist.

Aus DE 43 36 779 C2 ist ein weiterer Anschlagpunkt bekannt, der ausgelegt ist, damit mit dem Oberteil ein Drehmoment zum Anschließen des Schraubbolzens an einen handzuhabenden Gegenstand in das Unterteil bzw. dessen Schraubbolzen eingebracht werden kann. Das Oberteil dieses Anschlusspunktes verfügt über ein haubenförmiges Anschlussteil, mit dem dieses an das Unterteil angeschlossen ist. Das haubenförmige Anschlussteil erstreckt sich über die gesamte Oberseite des Unterteils, wodurch auch der Schraubenkopf vollständig bedeckt ist. Ein Eintrag von Verunreinigungen an den Schraubenkopf und in das Unterteil ist hierdurch vermieden. In die Innenseite des haubenförmigen Anschlussteils ist eine Innensechskantkontur eingebracht, in die der als Sechskantkopf ausgeführte Schraubenkopf des Schraubenbolzens eintaucht, wenn von dem Oberteil ein Drehmoment auf den Schraubbolzen übertragen werden soll. Das Oberteil ist gegenüber dem Unterteil in axialer Richtung verstellbar. Der drehmomentschlüssige Eingriff des Schraubenkopfes des Schraubbolzens des Unterteils in die Drehmitnahmekontur des Oberteils wird aufgehoben, sobald auf das Oberteil eine Kraft mit einer axial zur Längsachse gerichteten Komponente angreift. Dann wird das Oberteil mit seiner Drehmitnahmekontur von dem Schraubenkopf abgezogen. Wenn der Schraubenkopf vollständig aus der Drehmitnahmekontur des Oberteils herausgebracht ist, ist das Oberteil frei gegenüber dem Unterteil drehbar.

Ein weiterer Anschlagpunkt ist aus US 2,812,971 bekannt, dessen als Haken ausgebildetes Ösenteil in axialer Richtung gegenüber dem Unterteil verstellbar ist, um drehmomentschlüssig an einen Schraubbolzen angeschlossen werden zu können. In dem Oberteil ist das als Haken ausgebildete Anschlussmittel mit einem halbkugelförmigen Grundkörper ausgerüstet, der in Zugrichtung an einer komplementären Oberfläche des Unterteils gelagert ist. Dieser Grundkörper trägt zentrisch einen Sechskantkopf, der in eine Innensechskantausnehmung in dem Schraubenkopf des Schraubbolzens einsetzbar ist, wenn ein Drehmoment auf den Schraubbolzen übertragen werden soll. In seiner gegenüber dem Schraubbolzen drehbaren Stellung ist das Oberteil durch ein an den Haken angeschlossenes Zugmittel gehalten.

Bei dem Stand der Technik gemäß DE 43 36 779 C2 und US 2,812,971 besteht allerdings nicht die Möglichkeit, mittels eines Werkzeuges auf den Schraubenkopf des Schraubbolzens ein Drehmoment aufzubringen. Bei diesem vorbekannten Anschlagpunkt ist auch seine Handhabung nicht ganz unproblematisch, da besondere Sorgfalt bei Einleiten einer Kraft in den Anschlagpunkt erforderlich ist, vor allem wenn die auf das Oberteil einwirkende Krafteinwirkungsrichtung nicht mit der Drehachse des Anschlagpunktes fluchtet. Bei Kräften, die auf das Oberteil mit einer Querkraftkomponente einwirken, ist das Oberteil regelmäßig bestrebt sich in Richtung der anliegenden Kraft zu drehen. Damit ein unbeabsichtigtes Lösen des Anschlagpunktes von dem handzuhabenden Gegenstand im Falle einer solchen Krafteinleitung in das Oberteil, wenn dieses noch drehmomentschlüssig mit dem Schraubenkopf in Eingriff steht, nicht die Gefahr eines unbeabsichtigten Lösens des Schraubbolzens und damit des Anschlagpunktes von dem handzuhabenden Gegenstand in Kauf genommen werden muss, müssten die Oberteile manuell gegenüber den Unterteilen in ihre Anschlagpunktbenutzungsposition verstellt werden, in der diese dann gegenüber dem Unterteil frei drehbar sind. Dieses ist jedoch aufwendig.

Ausgehend von dem diskutierten Stand der Technik liegt der Erfindung daher die Aufgabe zu Grunde, einen Anschlagpunkt der eingangs genannten Art dergestalt weiter zu bilden, dass dieser ohne Zuhilfenahme eines Werkzeuges oder eines Kupplungsstückes durch Aufbringen eines Drehmomentes auf das Oberteil an einen handzuhabenden Gegenstand mit seinem Schraubbolzen anschließbar ist, bei dem jedoch die zu DE 43 36 779 C2 beschriebene Problematik beim Anlegen von Kräften mit einer Querkraftkomponente auf das Oberteil vermieden ist.

Gelöst wird diese Aufgabe erfindungsgemäß durch einen Anschlagpunkt der eingangs genannten, gattungsgemäßen Art, bei dem das Oberteil in axialer Richtung gegenüber dem Unterteil gegen die Rückstellkraft einer Rückstellfeder oder einer Rückstellfederanordnung verstellbar ist, wobei in einer ersten Stellung das Oberteil frei gegenüber dem Unterteil drehbar ist und in einer zweiten Stellung das Oberteil drehmomentschlüssig auf den Schraubbolzen wirkt, wobei der Schraubenkopf zumindest eine außenseitige Drehmitnahmekontur aufweist und das Oberteil wenigstens eine komplementäre Drehmitnahmekontur trägt, die in Folge einer axialen Verstellung des Oberteils aus seiner ersten Stellung in seine zweite Stellung mit der Drehmitnahmekontur des Unterteils in Eingriff stellbar ist, wobei das Unterteil einen Lagerkörper mit zwei in radialer Richtung nach außen weisenden, in axialer Richtung voneinander beabstandeten Lagerflächen aufweist, an welchen Lagerflächen das Oberteil in seiner Benutzungsstellung in radialer Richtung gelagert ist.

Bei diesem Anschlagpunkt wird das erforderliche Drehmoment zum Anschließen desselben an einen handzuhabenden Gegenstand von dem Oberteil in den Schraubenkopf des Schraubbolzens eingeleitet, typischerweise unmittelbar. Zu diesem Zweck verfügt der Schraubenkopf über zumindest eine Drehmitnahmekontur. Das Oberteil verfügt über eine Drehmitnahmekontur, die komplementär zu der Drehmitnahmekontur des Schraubenkopfes ausgeführt ist. Das Oberteil ist aus seiner ersten Stellung, in der dieses gegenüber dem Unterteil und damit auch gegenüber dem Schraubenkopf des Schraubbolzens frei drehbar ist, gegen die Kraft einer Rückstellfeder oder einer Rückstellfederanordnung axial verstellbar, um die zueinander komplementären Drehmitnahmekonturen in Eingriff zu stellen. Somit befindet sich das Oberteil mit seiner Drehmitnahmekontur nur dann in einer Ineingriffstellung mit der Drehmitnahmekontur des Schraubkopfes des Schraubbolzens des Unterteils, wenn dieses aktiv zum Erstellen der Ineingriffstellung gegen die Rückstellkraft der Rückstellfeder oder der Rückstellfederanordnung verstellt worden ist. Dies hat zur Folge, dass ohne eine solche axiale Krafteinwirkung, die in Richtung zu dem Unterteil gerichtet ist, sich das Oberteil immer in seiner gegenüber dem Unterteil frei drehbaren Stellung befindet. Zum Anschließen dieses Anschlagpunktes an einen handzuhabenden Gegenstand wird das Oberteil gegen die Rückstellkraft der Rückstellfeder oder der Rückstellfederanordnung in Richtung zu dem Unterteil bewegt, um die drehschlüssige Ineingriffstellung zwischen diesen beiden Teilen herbeizuführen und sodann den Gewindeschaft des Schraubbolzens in die hierfür vorgesehene Innengewindebohrung des handzuhabenden Gegenstandes einzuschrauben. Ist der Anschlagpunkt an einen handzuhabenden Gegenstand angeschlossen, wird das Oberteil losgelassen, sodass dieses dann durch die in der Rückstellfeder oder Rückstellfederanordnung gespeicherte Kraft von dem Unterteil in axialer Richtung weggedrückt und hierdurch die drehmitnehmende Ineingriffstellung mit dem Schraubenkopf aufgehoben wird. Ein solcher Anschlagpunkt ist nicht nur besonders nutzerfreundlich, da dieser ohne zusätzliche Werkzeuge oder andere Gerätschaften an einen handzuhabenden Gegenstand angeschlossen und von diesem auch wieder gelöst werden kann, sondern auch sicher, wenn nach Anschließen desselben auf diesen eine Kraft, sei es eine Zurrkraft oder eine Hebekraft mit einer Querkraftkomponente einwirkt. Vor allem wenn ein Gegenstand mit daran befindlichen Anschlagpunkten festgelegt werden soll, dürfte die angreifende Kraft zur Drehachse des Oberteils gegenüber dem Unterteil regelmäßig Querkraftanteile haben.

Auch wenn grundsätzlich die auf das Oberteil wirkende Rückstellkraft durch eine Rückstellfeder oder eine Rückstellfederanordnung mit unterschiedlichen Geometrie bereitgestellt werden kann, ist in einer bevorzugten Ausgestaltungsbeispiel vorgesehen, als Rückstellfeder oder Rückstellfederanordnung eine solche einzusetzen, die nur eine geringe Bauhöhe aufweist, wie beispielsweise eine Tellerfeder, eine Tellerfederanordnung oder eine Wellenfeder oder eine Wellenfederanordnung. Zylindrische Wellenfedern, die aus einer oder mehreren Windungen gefertigt sind, vermögen die benötigte Rückstellkraft gegenüber einer Schraubendruckfeder mit einer um etwa 50% reduzierten Länge bereitzustellen. Entsprechend geringer ist die erforderliche Bauhöhe. Bei Wellenfedern handelt es sich um Flachdraht-Druckfedern, die in Spiralrichtung gewellt sind. Auf Grund der nur geringen benötigten Bauhöhe (Erstreckung in Einfederungsrichtung) einer solchen Wellenfeder kann eine Krafteinleitung von dem Oberteil in das Unterteil bei Anliegen von auf das Oberteil wirkenden Querkräften mit nur geringem Abstand von der Oberfläche des handzuhabenden Gegenstandes in das Unterteil erfolgen. Entsprechend geringer ist die durch Querkräfte einwirkende Hebelkraft.

In einer Ausgestaltung eines solchen Anschlusspunktes ist vorgesehen, dass das Oberteil einen ringförmigen Lagerkörper aufweist. Mit dem ringförmigen Lagerkörper ist das Oberteil an dem Unterteil in radialer Richtung wirkend gelagert. Angeformt an diesen Lagerkörper ist ein Ösenteil, welches bei dieser Ausgestaltung das Anschlussmittel für ein Anschlag- oder Zurrmittel darstellt. Das Ösenteil überspannt nach Art eines Bogens den Lagerkörper. Auf Grund der ringförmigen Konzeption des Lagerkörpers und der bogenförmigen Ausbildung des Ösenteils ist der Schraubenkopf des Schraubbolzens nicht verdeckt. Der Schraubenkopf kann beispielsweise eine darin eingebrachte Drehmitnahmekontur, beispielsweise als Innensechskant ausgeführt, aufweisen, sodass, sollten die für das Oberteil aufgebrachten manuellen Kräfte nicht zum Lösen des Schraubbolzens ausreichen, in diese Drehmitnahmekontur ein entsprechendes Werkzeug eingesetzt werden. Grundsätzlich ist Gleiches auch möglich, wenn der Schraubenkopf des Schraubbolzens als Außensechskantkopf ausgeführt ist.

Bei einer solchen Ausgestaltung sind an zumindest einer Innenseite des Ösenteils Drehmitnahmenocken abragend angeformt, deren zur Drehachse des Oberteils weisende Seite die Drehmitnahmekontur des Oberteils darstellt. Typischerweise wird man einen solchen Drehmitnahmenocken an den Innenseiten von beiden Ösenteilansätzen vorsehen, wenn der Schraubenkopf zumindest zwei diametral einander gegenüberliegende Drehmitnahmeflächen aufweist, wie dieses bei einem Sechskantkopf der Fall ist. Durch derartige, nach innen abragende Drehmitnahmenocken wird die Nutzöffnung zum Anschließen eines Anschlag- oder Zurrmittels des Ösenteils nicht beeinträchtigt. Vielmehr verhindern die Drehmitnahmenocken, dass ein an das Ösenteil angeschlossenes Anschlag- oder Zurrmittel in den vorhandenen Spalt zwischen dem jeweiligen Ösenansatz und dem Schraubenkopf hineinrutscht. Eine unerwünschte drehmomentschlüssige Verbindung durch Hineinrutschen des Anschlag- oder Zurrmittels in diesen Spalt zwischen dem Oberteil und dem Schraubenkopf des Schaubbolzens ist damit wirksam verhindert.

Die Drehmitnahmekontur des Schraubenkopfes ist typischerweise als ebene Fläche ausgeführt, deren Ebene parallel zur Längserstreckung der Längsachse des Schraubbolzens verläuft. Es ist grundsätzlich ausreichend, wenn der Schraubenkopf eine einzige derartige Fläche aufweist. Vorzugsweise verfügt der Schraubenkopf jedoch über zumindest zwei einander diametral gegenüberliegende Drehmitnahmeflächen, ist beispielsweise als Sechskantkopf ausgeführt. Bei einer solchen Ausgestaltung kann eine Drehmitnahme zwischen dem Oberteil und dem Unterteil alle 60° erstellt werden, was die Handhabung vereinfacht.

Das Unterteil verfügt über einen aus zwei Lagerteilen bereitgestellten Lagerkörper. Der Lagerkörper weist zwei in radialer Richtung nach außen weisende und in axialer Richtung voneinander beabstandete Lagerflächen auf. An diesen Lagerflächen ist das Oberteil in seiner gegenüber dem Unterteil frei drehbaren Benutzungsstellung gelagert. Auf diese Weise ist das Oberteil vor allem auch bei auf dieses einwirkenden Querkräften sicher an dem Unterteil gelagert. Die Ausführung eines Lagerkörpers mit zwei in axialer Richtung voneinander beabstandeten, in radialer Richtung nach außen weisenden Lagerflächen erlaubt ist, dass zwischen diesen beiden Lagerflächen eine umfängliche Freilassung verbleibt. Diese wird gemäß einem Ausführungsbeispiel in zweierlei Hinsicht genutzt. Zum einen greift zum Anschließen des Oberteils an das Unterteil in diese Freilassung das Oberteil mit einem sich in radialer Richtung nach innen erstreckenden Lagerflansch ein. Hierdurch ist das Oberteil in axialer Richtung formschlüssig an den Lagerkörper des Unterteils angeschlossen. Die Freilassung wird des Weiteren dafür genutzt, um in dieser die Rückstellfeder oder die Rückstellfederanordnung unterzubringen. Diese stützt sich somit einerseits an der vom Oberteil wegweisenden Begrenzung der Freilassung und andererseits an dem Lagerflansch des Oberteils ab. Innerhalb der Freilassung ist die Rückstellfeder, beispielsweise die Wellenfeder bereits etwas unter Vorspannung gestellt. Hierdurch ist Sorge dafür getragen, dass in axialer Richtung das Oberteil spielfrei an dem Unterteil gehalten ist.

Der Lagerkörper des Unterteils ist gemäß einer Ausführung aus zwei miteinander verbunden, beispielsweise durch einen Presssitz verbundenen Lagerteilen bereitgestellt.

Angeschlossen ist der Lagerkörper des Unterteils an den Schraubbolzen mittels eines Sicherungsringes, der mit einem Teil seiner Querschnittsfläche in eine in den Schaft des Schraubbolzens eingebrachte umlaufende Nut und mit einem anderen Teil seiner Querschnittsfläche in eine in dem Lagerteil eingebrachte umlaufende Nut eingreift.

Die Erfindung ist nachfolgend anhand eines Ausführungsbeispiels unter Bezug auf die beigefügten Figuren beschrieben. Es zeigen:
- **Fig. 1:**: Eine perspektivische Ansicht eines Anschlusspunktes,
- **Fig. 2:**: eine Teilschnittdarstellung des Anschlusspunktes der Figur 1 mit seinem Oberteil in Benutzungsstellung und
- **Fig. 3:**: der Anschlagpunkt der Figur 2, dessen Oberteil sich gegenüber dem Unterteil in einer Stellung befindet, damit mittels des Oberteils das Unterteil an einem handzuhabenden Gegenstand festgelegt werden kann.

Ein Anschlagpunkt 1 dient zum Anschluss an einen Gegenstand, damit dieser gehandhabt werden kann, das heißt, je nach Anwendung angehoben, festgezurrt oder dergleichen. Der Anschlagpunkt 1 verfügt über ein Unterteil 2 und ein Oberteil 3. Das Oberteil 3 ist gegenüber dem Unterteil 2 drehbar gelagert. Bei dem dargestellten Ausführungsbeispiel ist das Lager als Gleitlager ausgeführt. Das Unterteil 2 verfügt über einen Lagerkörper 4, der an einen Schraubbolzen 5 angeschlossen ist. Der Schraubbolzen 5 verfügt über einen Gewindeschaft 6 und einen daran angeformten Schraubenkopf 7, der bei dem dargestellten Ausführungsbeispiel als Außensechskant ausgeführt ist. Zentrisch ist in den Schraubenkopf 7 bei dem dargestellten Ausführungsbeispiel zusätzlich eine innere Drehmitnahmekontur 8, ebenfalls als Sechskantkontur ausgeführt, eingebracht. Mit seinem Gewindeschaft 6 wird der Anschlagpunkt 1 an einen handzuhabenden Gegenstand (in den Figuren nicht dargestellt) angeschlossen.

Das Oberteil 2 des dargestellten Ausführungsbeispiels verfügt über einen ringförmigen Lagerkörper 9, der an der in radialer Richtung nach außen weisenden Lagerfläche des Lagerkörpers 4 des Unterteils 3 gelagert ist. Angeformt an den Lagerkörper 9 ist ein Ösenteil 10, welches zwei einander diametral gegenüberliegende Stellen des Lagerkörpers 9 bogenartig miteinander verbindet. An das Ösenteil 10 kann ein Anschlag- oder Zurrmittel angeschlossen werden, etwa ein Haken, ein Gurt, ein Seil oder dergleichen.

Der ringförmige Lagerkörper 9 schließt oberseitig und somit in Richtung zu seinem Ösenteil 10 bündig mit der Oberseite des Lagerkörpers 4 des Unterteils 2 ab, und zwar in denjenigen Bereichen, in denen sich nicht die Ansätze des Ösenteils 10 befinden. Dieses erlaubt eine seitliche Zugänglichkeit des Schraubenkopfes 7 zum Angriff eines Werkzeuges, sollte dieses zum Betätigen des Schraubbolzens 7 erforderlich sein. Grundsätzlich ist dieses jedoch nicht erforderlich.

Der als Sechskantkopf ausgeführte Schraubenkopf 7 verfügt über sechs Seitenflächen, die jeweils eine Drehmitnahmekontur darstellen. Diese ebenen Flächen verlaufen parallel zur Längsachse des Schraubbolzens 5. Dabei liegen immer zwei Drehmitnahmekonturflächen einander diametral bezüglich der Längsachse des Schraubbolzens 5 einander gegenüber.

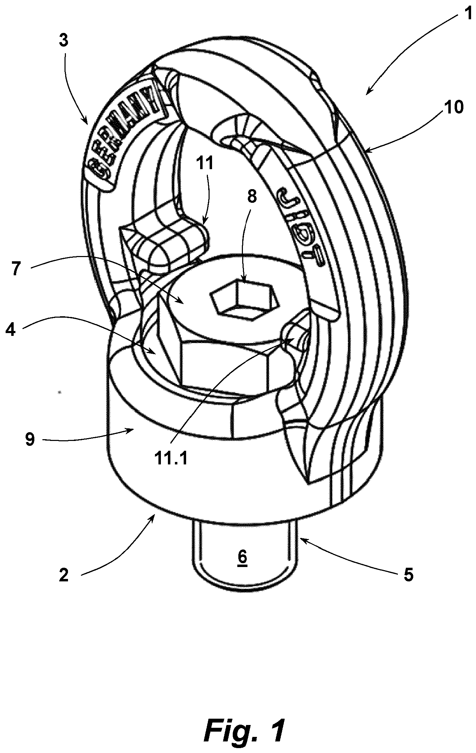

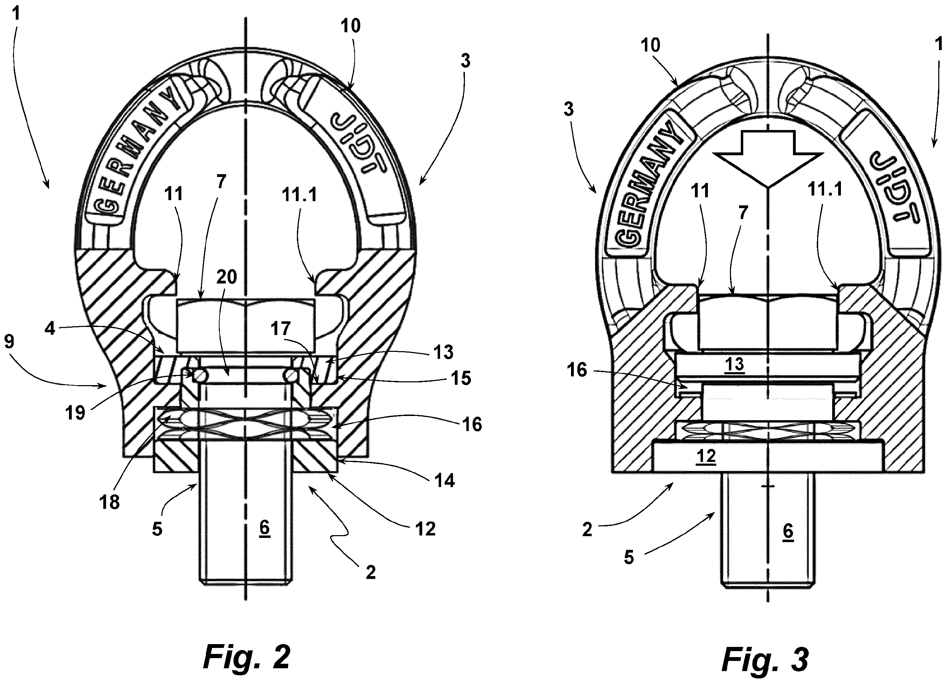

Figur 1 zeigt den Anschlagpunkt 1 mit seinem Oberteil 3 in seiner Benutzungsstellung, in der das Oberteil 3 frei gegenüber dem Unterteil 2 drehbar ist. Das Oberteil 3 ist, wie dieses nachstehend unter Bezugnahme auf Figur 2 beschrieben ist, gegenüber dem Unterteil 2 in längsaxialer Richtung des Schraubbolzens 5 verstellbar, und zwar gegen die Kraft einer Rückstellfeder. Durch die Rückstellfeder ist das Oberteil 3 in der in Figur 1 gezeigten Stellung gehalten. Eine Verstellung des Oberteils 3 gegenüber dem Unterteil 2 in axialer Richtung erfolgt somit gegen die Rückstellkraft der Rückstellfeder.

An den Innenseiten trägt das Ösenteil 10 im Bereich jedes Ösenteilansatzes einen Drehmitnahmenocken 11, 11.1. Die zur Drehachse des Oberteils 3 weisenden Seiten der Drehmitnahmenocken 11, 11.1 sind gerade ausgeführt und stellen komplementäre Drehmitnahmekonturen zu zwei einander diametral gegenüberliegenden Drehmitnahmekonturen des Schraubenkopfes 7 dar. In der in Figur 1 gezeigten Stellung des Oberteils 3 finden sich die Drehmitnahmenocken 11, 11.1 in einer Ebene oberhalb des oberen Abschlusses des Schraubenkopfes 7. Dieses ist deutlicher in der Teilschnittdarstellung der Figur 2 erkennbar. In dieser Figur sind die untere Hälfte des Oberteils 3 und der Lagerkörper 4 des Unterteils 2 geschnitten dargestellt. Aus der Darstellung der Figur 2 wird auch deutlich, dass ein in das Ösenteil 10 eingehängtes Anschlag- oder Zurrmittel durch die Drehmitnahmenocken 11, 11.1 daran gehindert ist, in den Zwischenraum zwischen der radial äußeren Seite des Schraubenkopfes 7 des Schraubbolzens 5 und der Innenseite des Ösenteils 10 im Bereich seines Ansatzes eindringen zu können.

Der Lagerkörper 4 des Unterteils 2 ist aus zwei Lagerteilen 12, 13 zusammengesetzt. Jedes Lagerteil 12, 13 ist an seiner radialen Mantelfläche als Lagerfläche ausgeführt, an der sich die innere Mantelfläche des ringförmigen Lagerkörpers 9 des Oberteils 3 abstützt bzw. welches daran gelagert ist. In Figur 2 sind diese beiden voneinander in axialer Richtung beabstandeten Lagerflächen mit den Bezugszeichen 14, 15 kenntlich gemacht. Bei dem Lagerteil 12 handelt es sich um einen ringförmigen, im Querschnitt L-förmig ausgeführten Körper, bei dem die Außenseite des Querschenkels die Lagerfläche 14 bildet. Zwischen den beiden die Lagerflächen 14, 15 bildenden Abschnitten des Lagerkörpers 4 befindet sich eine in Umfangsrichtung in radialer Richtung nach außen offene Freilassung 16. In diese greift ein sich in radialer Richtung nach innen erstreckender Lagerflansch 17 als Teil des Lagerkörpers 9 des Oberteils 3 ein. In axialer Richtung wirkt dieser gegen die zu dem Lagerflansch 17 weisende Seite des Lagerkörpers 13. Die axiale Erstreckung der Freilassung 16 ist so bemessen, dass der Lagerflansch 17 darin in axialer Richtung in Richtung zum Unterteil 2 hin verstellt werden kann, und zwar so weit, dass die als Drehmitnahmekonturen wirkenden Seiten der Drehmitnahmenocken 11, 11.1 zum drehmomentschlüssigen Anschließen des Oberteils 3 an den Schraubenkopf 7 gelangen. Innerhalb der Freilassung 16 befindet sich des Weiteren eine Wellenfeder 18, die zum einen an der zu dem Lagerteil 13 weisenden Seite des Lagerteils 14 und andererseits an dem Lagerflansch 17 abgestützt ist. Die Wellenfeder 18 ist als spiralgewundene Wellenfeder ausgeführt. Auf diese Weise ist das Oberteil 3 gegenüber dem Unterteil 2 in seiner in den Figuren 1 und 2 gezeigten Stellung gehalten.

Die beiden Lagerteile 13, 14 des Unterteils 2 sind durch eine Presssitzverbindung miteinander dauerhaft verbunden. Angeschlossen ist der Lagerkörper 4 des Unterteils 2 an den Schaft des Schraubbolzens 5 mittels eines Sicherungsringes 19, der mit einem Teil seiner Querschnittsfläche in eine in dessen Schaft eingebrachte umlaufende Nut 20 und mit einem anderen Teil in eine umlaufende Nut des Lagerkörpers 4 eingreift. Bei dem dargestellten Ausführungsbeispiel befindet sich die Nut des Lagerkörpers 4 endseitig an dem Lagerteil 12 und ist durch einen seinen Innendurchmesser vergrößernden Absatz bereit gestellt. In diesen wird der Sicherungsring 19 eingelegt, bevor der endseitig offene Absatz zum Ausbilden einer Nut durch das Lagerteil 13 verschlossen wird.

Zum Anschließen und Lösen des Anschlagpunktes 1 an bzw. von einem handzuhabenden Gegenstand wird das Oberteil 3 durch Ausüben einer Drückbewegung in Richtung zu dem Unterteil 2 bewegt (durch einen Blockpfeil in Figur 3 angedeutet), damit die durch die Drehmitnahmekonturen 11, 11.1 bereitgestellten Drehmitnahmekonturen mit zwei einander diametral gegenüber liegenden Drehmitnahmekonturen des Schraubenkopfes in Eingriff gestellt werden können. Diese Stellung des Oberteils gegenüber dem Unterteil 2 des Anschlagpunktes 1 ist in Figur 3 gezeigt. Die Drehmitnahmestellung des Oberteils 3 gegenüber dem Unterteil 2 ist in Figur 3 anhand einer von ihrer Geometrie etwas anders ausgeführten Oberteil 3 dargestellt, was für die Beschreibung der Erfindung jedoch unerheblich ist. In dieser Darstellung sind zudem die beiden Lagerteile 12, 13 in einer Seitenansicht und nicht im Schnitt, wie in Figur 2, gezeigt. Die Verstellbewegung des Oberteils 3 gegenüber dem Unterteil 2 erfolgt gegen die Rückstellkraft der Wellenfeder 18. Aufgrund der durch Herabdrücken des Oberteils 3 gegenüber dem Unterteil 2 erstellte drehmomentschlüssige Verbindung zwischen dem Oberteil 3 und dem Schraubenkopf 7 kann dann mit dem Ösenteil 10 als Werkzeug der Schraubbolzen 5 in eine an dem handzuhabenden Gegenstand eingebrachte und mit einem zu dem Gewindeschaft 6 komplementären Innengewinde ausgerüstete Bohrung eingeschraubt werden, bis die zu dem handzuhabenden Gegenstand weisende Seite des Lagerteils 14 an der Oberfläche des handzuhabenden Gegenstandes verspannt ist. Anschließend wird das Ösenteil 10 losgelassen. In Folge der in der Wellenfeder 18 gespeicherten Energie springt das Oberteil 3 dann selbsttätig in seine in den Figuren 1 und 2 gezeigte Stellung zurück. In dieser Stellung ist sichergestellt, dass auf das Ösenteil 10 einwirkende Querkräfte bei Kraftbeaufschlagung eines darin eingehängten Anschlag- oder Zurrmittels kein unbeabsichtigtes Lösen des Schraubbolzens zur Folge haben.

Die Lagerung des Lagerkörpers 9 des Oberteils 3 an den im axialen Abstand zueinander angeordneten Lagerflächen 14, 15 des Lagerkörpers 4 in der in den Figuren 1 und 2 gezeigten Benutzungsstellung des Anschlagpunktes 1 gewährleistet eine verkantungsfreie Krafteinleitung, vor allem auch bei Anliegen von Querkräften. Dadurch ist gewährleistet, dass auch bei Anliegen der Querkräften sich das Ösenteil in Richtung der anliegenden Kraft bestimmungsgemäß ausrichtet und nicht verkantet. Diese in axialer Richtung gesehene Zwei-Punkt-Lagerung ist zwischen dem Oberteil 3 und dem Unterteil 2 des Anschlagpunktes auch gegeben, wenn das Oberteil 3 drehmomentschlüssig mit dem Schraubenkopf 7 in Eingriff gestellt ist.

Die Erfindung ist anhand eines Ausführungsbeispiels beschrieben worden. Ohne den Umfang der geltenden Ansprüche zu verlassen, ergeben sich für einen Fachmann zahlreiche weitere Möglichkeiten, die Erfindung umzusetzen, ohne dass dieses im Rahmen dieser Ausführungen näher erläutert werden müsste.

### Bezugszeichenliste

- 1: Anschlagpunkt
- 2: Unterteil
- 3: Oberteil
- 4: Lagerkörper
- 5: Schraubbolzen
- 6: Gewindeschaft
- 7: Schraubenkopf
- 8: Drehmitnahmekontur
- 9: Lagerkörper
- 10: Ösenteil
- 11, 11.1: Drehmitnahmenocken
- 12: Lagerteil
- 13: Lagerteil
- 14: Lagerfläche
- 15: Lagerfläche
- 16: Freilassung
- 17: Lagerflansch
- 18: Wellenfeder
- 19: Sicherungsring
- 20: Nut

## Patentansprüche

1. Anschlagpunkt (1) umfassend ein Unterteil (2) mit einem einen Schraubenkopf (7) aufweisenden Schraubbolzen (5) zum Anschließen des Anschlagpunktes (1) an einen mit diesem festzulegenden oder handzuhabenden Gegenstand und ein gegenüber dem Unterteil (2) um die Längsachse des Schraubbolzens (5) drehbares, an das Unterteil (2) angeschlossenes Oberteil (3) mit einem Anschlussmittel zum Anschließen eines Anschlag- oder Zurrmittels, welches Oberteil (3) in axialer Richtung gegenüber dem Unterteil (2) gegen die Rückstellkraft einer Rückstellfeder (18) oder einer Rückstellfederanordnung verstellbar ist, wobei in einer ersten Stellung das Oberteil (3) frei gegenüber dem Unterteil (2) drehbar ist und in einer zweiten Stellung das Oberteil (3) drehmomentschlüssig auf den Schraubbolzen (5) wirkt, wobei der Schraubenkopf (7) zumindest eine außenseitige Drehmitnahmekontur aufweist und das Oberteil (3) wenigstens eine komplementäre Drehmitnahmekontur trägt, die in Folge einer axialen Verstellung des Oberteils (3) aus seiner ersten Stellung in seine zweite Stellung mit der Drehmitnahmekontur des Unterteils (2) in Eingriff stellbar ist, wobei das Unterteil (2) einen Lagerkörper (4) mit zwei in radialer Richtung nach außen weisenden, in axialer Richtung voneinander beabstandeten Lagerflächen (14, 15) aufweist, an welchen Lagerflächen (14, 15) das Oberteil (3) in seiner Benutzungsstellung in radialer Richtung gelagert ist.

2. Anschlagpunkt nach Anspruch 1, **dadurch gekennzeichnet, dass** das Oberteil (3) einen ringförmigen Lagerkörper (4) und ein daran angeformtes Ösenteil (10) als Anschlussmittel aufweist, wobei der Schraubenkopf (7) des Unterteils (2) in den von dem Ösenteil (10) eingefassten Innenraum hineinragt, und dass die zumindest eine Drehmitnahmekontur des Oberteils (3) durch die zur Drehachse weisende Seite eines innenseitig von dem Ösenteil (10) abragenden Drehmitnahmenockens (11, 11.1) bereitgestellt ist.

3. Anschlagpunkt nach Anspruch 1 oder 2, **dadurch gekennzeichnet, dass** die Drehmitnahmekontur des Schraubenkopfes (7) als ebene Fläche ausgeführt ist, deren Ebene parallel zur Längserstreckung der Längsachse des Schraubbolzens (5) verläuft.

4. Anschlagpunkt nach Anspruch 3, **dadurch gekennzeichnet, dass** der Schraubenkopf (7) als Sechskantkopf ausgeführt.

5. Anschlagpunkt nach einem der Ansprüche 1 bis 4, **dadurch gekennzeichnet, dass** das Oberteil (3) zwei einander bezüglich seiner Drehachse diametral gegenüberliegende Drehmitnahmekonturen trägt.

6. Anschlagpunkt nach einem der vorstehenden Ansprüche, **dadurch gekennzeichnet, dass** die beiden Lagerflächen (14, 15) des Lagerkörpers (4) des Unterteils (2) von jeweils einem Lagerteil (12, 13) bereitgestellt sind, welche beiden Lagerteile (12, 13) miteinander verbunden sind und zwischen welchen Lagerflächen (14, 15) eine umfängliche, in radialer Richtung nach außen offene Freilassung (16) vorgesehen ist, in die das Oberteil (3) mit einem Lagerflansch (17) eingreift.

7. Anschlagpunkt nach Anspruch 6, **dadurch gekennzeichnet, dass** in der Freilassung (16) die Rückstellfeder (18) oder die Rückstellfederanordnung in axialer Richtung auf den Lagerflansch (17) des Oberteils (3) wirkend angeordnet ist.

8. Anschlagpunkt nach Anspruch 7, **dadurch gekennzeichnet, dass** als Rückstellfeder eine Wellenfeder (18) vorgesehen ist.

9. Anschlagpunkt nach einem der Ansprüche 1 bis 8, **dadurch gekennzeichnet, dass** das Lagerteil (4) des Unterteils (2) mit einem Sicherungsring (19) an den Schaft des Schraubbolzens (5) angeschlossen ist.

## Claims

1. Anchorage point (1) comprising an under part (2), with a screw bolt (5) comprising a screw head (7) for connecting the anchorage point (1) to an object which is to be secured or handled by means of this, and an upper part (2) connected to the under part and rotatable in relation to the under part (2) about the longitudinal axis of the screw bolt (5), with a connection means for connecting an anchorage means or tension means, said upper part (3) being adjustable in an axial direction in relation to the under part (2) against the resetting force of a resetting spring (18) or a resetting spring assembly, wherein, in a first position, the upper part (3) can be freely rotated in relation to the under part (2), and in a second position the upper part (3) takes torque closure effect on the screw bolt (5), wherein the screw head (7) comprises at least one outside rotation contour, and the upper part (3) carries at least one complementary rotation contour, which, as a consequence of an axial displacement of the upper part (3) out of its first position into its second position, can be moved into engagement with the rotation contour of the under part (2), wherein the under part (2) comprises a bearing body (4), which in turn comprises two bearing surfaces (14, 15), spaced apart from one another in the axial direction and facing outwards in the radial direction, on which bearing surfaces (14, 15) the upper part (3) is mounted in the radial direction when in its position of use.

2. Anchorage point according to claim 1, **characterised in that** the upper part (3) comprises an annular bearing body (4) and an eye part (10) formed on this as connection means, wherein the screw head (7) of the under part (2) projects into the inner space enclosed by the eye part (10), and that the at least one rotation contour of the upper part (3) is provided by the side facing towards the axis of rotation of a rotation cam (11, 11.1) projecting inwards from the eye part (10).

3. Anchorage point according to claim 1 or 2, **characterised in that** the rotation contour of the screw head (7) is configured as a flat surface, of which the plane runs parallel to the longitudinal extension of the longitudinal axis of the screw bolt (5).

4. Anchorage point according to claim 3, **characterised in that** the screw head (7) is configured as a hexagonal head.

5. Anchorage point according to any one of claims 1 to 4, **characterised in that** the upper part (3) carries two rotation contours which are diametrically opposite one another in relation to its axis of rotation,

6. Anchorage point according to any one of the preceding claims, **characterised in that** the two bearing surfaces (14, 15) of the bearing body (4) of the under part (2) are provided in each case by a bearing part (12, 13), these two bearing parts (12, 13) being connected to one another, and between these bearing surfaces (14, 15) a circumferential space (16) is provided, open to the outside in the radial direction, into which the upper part (3) engages with a bearing flange (17).

7. Anchorage point according to claim 6, **characterised in that** the reset spring (18) or the reset spring assembly are arranged in the space (16), taking effect in the axial direction onto the bearing flange (17) of the upper part (3).

8. Anchorage point according to claim 7, **characterised in that** a shaft spring (18) is provided as the reset spring.

9. Anchorage point according to any one of claims 1 to 8, **characterised in that** the bearing part (4) of the under part (2) is connected by a securing ring (19) to the shaft of the screw bolt (5).

## Revendications

1. Point d'ancrage (1) comportant une embase (2) avec un boulon fileté (5) présentant une tête de vis (7), destiné à raccorder le point d'ancrage (1) à un objet à manutentionner ou à solidariser avec ce dernier et une partie supérieure (3), rotative par rapport à l'embase (2) autour de l'axe longitudinal du boulon fileté (5), raccordée à l'embase (2), comportant des moyens de raccordement afin de raccorder un moyen d'ancrage ou d'arrimage, laquelle partie supérieure (3) est ajustable dans le sens axial par rapport à l'embase (2) contre la force de rappel d'un ressort de rappel (18) ou d'un agencement avec ressort de rappel, la partie supérieure (3) étant, dans une première position, en rotation libre par rapport à l'embase (2) et la partie supérieure (3) agissant, dans une seconde position, sur le boulon fileté (5) en conservant le même couple de rotation, la tête de vis (7) présentant du côté extérieur au moins un contour d'entraînement en rotation et la partie supérieure (3) supportant au moins un contour d'entrainement en rotation complémentaire, lequel peut être mis, à la suite d'un déplacement axial de la partie supérieure (3), de sa première position dans une seconde position, où le contour d'entraînement en rotation de l'embase (2) peut être engagé, l'embase (2) présentant un corps de palier (4) avec deux surfaces palières (14, 15) orientées dans le sens radial vers l'extérieur, espacées l'une de l'autre dans le sens axial, sur lesquelles surfaces palières (14, 15) la partie supérieure (3) est en appui dans le sens radial dans sa position d'utilisation.

2. Point d'ancrage selon la revendication 1, **caractérisé en ce que** la partie supérieure (3) présente un corps de palier (4) de forme annulaire et une pièce en œillet (10) moulée sur celui-ci, la tête de vis (7) de l'embase (2) s'engageant en saillie dans l'espace intérieur délimité par la pièce en œillet (10), et **en ce que** le au moins un contour d'entraînement en rotation de la partie supérieure (3) est mis à disposition par la face orientée vers l'axe de rotation d'un toc d'entraînement (11, 11.1) en rotation saillant vers l'intérieur de la pièce en œillet (10).

3. Point d'ancrage selon la revendication 1 ou 2, **caractérisé en ce que** le contour d'entraînement en rotation de la tête de vis (7) est conformé en surface plane, dont le plan s'étend parallèlement à l'étendue longitudinal de l'axe longitudinal du boulon fileté (5).

4. Point d'ancrage selon la revendication 3, **caractérisé en ce que** la tête de vis (7) est conformée en tête à six pans.

5. Point d'ancrage selon l'une des revendications 1 à 4, **caractérisé en ce que** la partie supérieure (3) supporte deux contours d'entraînement en rotation, lesquels sont, quand on se réfère à son axe de rotation, diamétralement opposés l'un par rapport à l'autre.

6. Point d'ancrage selon l'une des revendications précédentes, **caractérisé en ce que** les deux surfaces palières (14, 15) du corps de palier (4) de l'embase (2) sont mises à disposition par respectivement un palier (12, 13), lesquels deux paliers (12, 13) sont reliés l'un à l'autre et qu'entre lesdites surfaces palières (14, 15) est prévu un dégagement (16) sur toute la périphérie, ouvert dans le sens radial vers l'extérieur, dans lequel s'engage la partie supérieure (3) avec une flasque de palier (17).

7. Point d'ancrage selon la revendication 6, **caractérisé en ce que** le ressort de rappel (18) ou l'agencement à ressort de rappel, agissant dans le sens axial sur la flasque de palier (17), est disposé dans le dégagement (16).

8. Point d'ancrage selon la revendication 7, **caractérisé en ce qu'un** ressort ondulé (18) est prévu en tant que ressort de rappel.

9. Point d'ancrage selon l'une des revendications 1 à 8, **caractérisé en ce que** le palier (4) de l'embase (2) est relié par une bague de blocage (19) à la tige du boulon fileté (5).
